# EUROPÄISCHE PATENTSCHRIFT

(11) **EP 4 514 593 B1**
(45) Veröffentlichungstag und Bekanntmachung des Hinweises auf die Patenterteilung: **29.04.2026**
(21) Anmeldenummer: 23720638.8
(22) Anmeldetag: 28.04.2023
(51) Int. Cl.: B29D 11/00, C08G 59/22, C09J 163/00, G02B 1/04

(54) **VERFAHREN ZUR ANPASSUNG DES BRECHUNGSINDEX**
METHOD OF ADJUSTING THE REFRACTIVE INDEX
PROCÉDURE D'AJUSTEMENT DE L'INDICE DE RÉFRACTION

(30) Priorität: 29.04.2022 DE 102022110540
(43) Veröffentlichungstag der Anmeldung: 05.03.2025
(73) Patentinhaber: tooz technologies GmbH, 73430 Aalen (DE)
(72) Erfinder: MICHELS, Georg, 73430 Aalen (DE); POLLMANN, Michael, 89551 Königsbronn (DE); CHEN, Huang Min, 73431 Aalen (DE)
(74) Vertreter: Kraus & Lederer PartGmbB
(86) Internationale Anmeldenummer: PCT/EP2023/061280
(87) Internationale Veröffentlichungsnummer: WO 2023/209170

(56) Entgegenhaltungen:
- WO-A1-2015/121341
- US-A1- 2003 128 336
- US-A1- 2018 126 449
- US-A1- 2018 299 705

## Beschreibung

### TECHNISCHES GEBIET

Verschiedene Aspekte der Offenbarung betreffen die Herstellung von Optikkomponenten für Optikelemente, die in Anzeigevorrichtungen, wie z.B. Datenbrillen verwendet werden.

### HINTERGRUND

Aus dem Stand der Technik sind Klebstoffe bekannt, die als spezialisierte optische Feinkitte zum Füllen von Strukturen geeignet sind, wie sie zum Beispiel in Datenbrillen zur Einbettung funktionaler Schichten vorkommen.

Schlüssel der Entwicklung für solche Datenbrillen sind die sog. Smart Glasses, die virtuelle Inhalte in das Sichtfeld übertragen. Dabei wird typischerweise eine spritzgegossene Optikkomponente mit verschiedenen hochpräzisen Freiformflächen, ein sogenannter Waveguide, verwendet. Eine im Spritzguss hergestellte Fresnel-Struktur, die semitransparent beschichtet wird, dient dazu, dass das virtuelle Bild dem Auge gezeigt und gleichzeitig der Betrachter die Umgebung durch diese Struktur wahrnehmen kann, und diese Sicht nicht beeinträchtigt wird. Alternativ kann diese Struktur auch partiell zu 100% spiegelnd beschichtet werden. Sofern die Bereiche mit 100% Verspiegelung relativ klein sind (z.B. Durchmesser <1mm) und die dazwischen liegenden Bereiche eine ausreichende hohe Transmissionsrate für das Umgebungslicht aufweisen, kann der Betrachter ebenfalls ein der Umgebung überlagertes virtuelles Bild wahrnehmen.

Damit durch die im Smart Glass angeordneten Prismen oder Spiegelstrukturen eine ungestörte Sicht in horizontaler und vertikaler Richtung möglich ist, ist es zweckdienlich, wenn der verwendete Klebstoff einen möglichst identischen Brechungsindex aufweist wie das Grundmaterial. Darüber hinaus kann der Klebstoff Bestandteil des optischen Pfades für das virtuelle Bild sein. Für die Herstellung solcher Vorrichtungen ist eine exakte Brechwertanpassung von Feinkitten an Optikkomponenten nötig, die auch als "Indexmatching" bezeichnet wird.

Üblicherweise werden dafür verwendete Optikelemente durch Verkleben und Zusammenfügen von Optikkomponenten, wie z.B. transparenten Schalen oder überfüllten Fresnel-Strukturen, hergestellt.

Gemäß der WO 2015/121341 A1 können Klebstoffe mit optisch funktionellen Eigenschaften wie z.B. einem definierten Brechungsindex hergestellt werden, indem Klebstoff-Komponenten mit optischer Qualität eingesetzt werden. Ein gewünschter Brechungsindex oder eine gewünschte Dispersion (Abbezahl) solcher Klebstoffe lässt sich durch die Auswahl der eingesetzten Komponenten, insbesondere deren chemische Struktur, auf den gewünschten Zweck einstellen. Die Brechwertanpassung von Klebstoffen für Optikkomponenten (Feinkitte), insbesondere die Brechwertanpassung an eine zu verklebende Optikkomponente, kann für definierte Wellenlängen erfolgen (z.B. bei optischen Meßsystemen) oder aber auch bei polychromatischen Anwendungen für einen bestimmten Wellenlängenbereich (z.B. 450 nm - 700 nm). Bei polychromatischer Brechwertanpassung ist es wichtig, die Dispersion (Wellenlängenabhängigkeit des Brechwerts) von Feinkitt und Optikkomponenten so gut wie möglich aufeinander abzustimmen. Üblicherweise wird in solchen Fällen eine Schwerpunktwellenlänge definiert, z.B. 546 nm (nₑ). Die Dispersion von Feinkitten kann durch die verwendeten Klebstoffkomponenten gesteuert werden, da die chemische Struktur der Monomersubstanzen erheblichen Einfluss auf den Brechwert und die Dispersion hat.

Eine spezielle Anwendung ist die zuvor genannte Verkittung optischer Bauteile oder Optikkomponenten, die teilweise diffraktive, reflektive und/oder andere mikrooptische Elemente an einer Bauteiloberfläche aufweisen. Erfolgt eine Brechwertanpassung auf Δn < 0,0005, sind beispielsweise in der Kittschicht eingeschlossene diffraktive Strukturen optisch nahezu nicht mehr erkennbar.

In Abhängigkeit von der zu verfüllenden Struktur und deren relativer Lage zur Blickrichtung kann somit eine Anpassung des Brechungsindex zwischen Klebstoff und Grundmaterial auf die vierte oder fünfte Nachkommastelle notwendig werden, um einen möglichst ungestörten Seheindruck bei Durchblick für den Benutzer zu gewährleisten.

Klebstoffe, welche die o.g. Anforderungen wie beispielsweise einen dauerhaft konstanten Wert in der beschriebenen Genauigkeit für den Brechungsindex erfüllen, sind kommerziell kaum verfügbar, da selbst bei gleichen Klebstoffen meist eine zumindest geringfügige Schwankung zwischen verschiedenen Chargen auftritt.

Diese Genauigkeit im Brechungsindex bei der Synthese einzustellen, ist eine komplexe Aufgabe. Handelt es sich um ein 2-Komponentensystem (2K System) aus Harz und Härter, oder ein Gemisch aus mehreren 1K Systemen, ist jede Komponente für sich in extrem engen Toleranzen zu fertigen. Wenn Chargen unterschiedlichen Produktionsdatums aus Harz und Härter unter Einhaltung der maximal zulässigen Indexabweichung im Produktionsalltag verwendet werden sollen, steigern sich Aufwand und Toleranzmanagement nochmals.

Werden die zu verklebenden Gläser bzw. die zu füllenden Strukturen als Optikkomponenten im Spritzgussverfahren hergestellt, so sind Brechungsindexschwankungen im Grundglas selbst nicht auszuschließen. Diese Schwankungen sind zum Beispiel in den optischen Eigenschaften des verwendeten Kunststoffgranulates begründet, das ebenfalls herstellungsbedingte Variationen im Brechungsindex aufweist bzw. aufweisen kann. Durch die Prozessführung im Spritzgussprozess ergeben sich für das exakt gleiche Ausgangsmaterial in Abhängigkeit der Verarbeitungsparameter unterschiedliche Brechungsindizes am fertigen Bauteil. Diese können sich auch innerhalb des Bauteils lokal unterscheiden. Beispielhaft seien hier Temperatur und Scherbedingungen beim Aufschmelzen in der Zylinderschnecke, Einspritzgeschwindigkeit, Nachdruckprofil, Kühlzeit, Werkzeugtemperierung als Prozessparameter genannt, die das Erstarrungsverhalten und somit auch die lokalen optischen Eigenschaften beeinflussen. Da diese Parameter auch die geometrischen Abmessungen des Spritzgussteils beeinflussen, werden sie üblicherweise auch zum Ausgleich von Umgebungs- und Fertigungsschwankung für die Einhaltung der geometrischen Bauteiltoleranzen herangezogen. Die prozesstechnische Abstimmung von Maßhaltigkeit und Brechungsindex für Grundglas und Klebstoffsystem stellt somit eine besondere Herausforderung dar.

### KURZE ZUSAMMENFASSUNG

Deshalb besteht ein Bedarf für verbesserte Techniken, um Optikelemente mit exakt angepasstem Brechungsindex herzustellen. Diese Aufgabe wird gelöst von den Merkmalen der unabhängigen Ansprüche. Die Merkmale der abhängigen Ansprüche definierten Ausführungsformen.

Ein Verfahren zur Anpassung des Brechungsindex eines Klebstoffs für ein Optikelement wird offenbart, wobei der Klebstoff optisch transparent ist und aus mehreren Ausgangsstoffen hergestellt wird, wobei das Verfahren umfasst:
- Herstellen mindestens eines Prüflings des Optikelements unter Verwendung des Klebstoffs,
- Durchführen einer optischen Analyse des mindestens einen Prüflings des Optikelements unter Erhebung mindestens einer Messgröße,
- Anpassen eines Mischungsverhältnisses der mehreren Ausgangsstoffe des Klebstoffs basierend auf einem Ergebnis der optischen Analyse, und
- Herstellen mehrerer Serienprodukte des Optikelements unter Verwendung des Klebstoffs mit dem angepassten Mischungsverhältnis der mehreren Ausgangsstoffe.

Bevorzugt können im erfindungsgemäßen Verfahren nacheinander mehrere Prüflinge des Optikelements hergestellt werden, wobei das Mischungsverhältnis der mehreren Ausgangsstoffe zwischen dem Herstellen der mehreren Prüflinge angepasst wird, basierend auf dem Ergebnis der vorangegangenen optischen Analysen der mehreren Prüflinge. Die Anpassung erfolgt vorzugsweise progressiv, linear oder degressiv.

Das Verfahren kann weiterhin das Implementieren eines Regelkreises umfassen, wobei der Regelkreis die mindestens eine Messgröße mit einem jeweiligen Sollwert vergleicht und als Regelgröße eine Dosierung von mindestens einem der mehreren Ausgangsstoffe beim Anpassen des Mischungsverhältnisses einstellt. Der Regelkreis kann zum Beispiel durch Software implementiert werden, die auf einem Prozessor basierend aus Programmcode aus einem Speicher ausgeführt wird. Ein entsprechender Controller kann verwendet werden. Insbesondere kann eine Regelungstoleranz eines solchen Regelungskreises als Abweichung von einem vorgegebenen Brechungsindex kleiner als 0,0005 oder kleiner als 0,0001 sein.

Der Klebstoff kann ein Zweikomponenten-Klebstoff sein, wobei die mehreren Ausgangsstoffe einen ersten Ausgangsstoff, einen zweiten Ausgangsstoff, einen dritten Ausgangsstoff und einen vierten Ausgangsstoff umfassen, und eine erste Komponente des Zweikomponenten-Klebstoffs aus dem ersten Ausgangsstoff und dem zweiten Ausgangsstoff gemischt wird, eine zweite Komponente des Zweikomponenten-Klebstoffs aus dem dritten Ausgangsstoff und dem vierten Ausgangsstoff gemischt wird, und das Anpassen des Mischungsverhältnisses der mehreren Ausgangsstoffe kann das Anpassen eines ersten Teil-Mischungsverhältnisses des ersten Ausgangsstoffs relativ zum zweiten Ausgangsstoffs beim Mischen der ersten Komponente, und das Anpassen eines zweiten Teil-Mischungsverhältnisses des dritten Ausgangsstoffs relativ zum vierten Ausgangsstoff beim Mischen der zweiten Komponente umfassen. Darüber hinaus kann das Anpassen des Mischungsverhältnisses das Anpassen eines dritten Teil-Mischungsverhältnisses der ersten Komponente relativ zur zweiten Komponente umfassen.

Bei dem erfindungsgemäßen Verfahren kann das Mischen der ersten Komponente des Zweikomponenten-Klebstoffs aus einem ersten Ausgangsstoff und einem zweiten Ausgangsstoff in einem ersten Mischer erfolgen, und das Mischen der zweiten Komponente des Zweikomponenten-Klebstoffs aus einem dritten Ausgangsstoff und einem vierten Ausgangsstoff in einem zweiten Mischer. Das Mischen der ersten und zweiten Komponente des Zweikomponenten-Klebstoff kann in einem dem ersten und zweiten Mischer nachgeschalteten dritten Mischer erfolgen.

Das Mischungsverhältnis der mehreren Ausgangsstoffe kann durch Veränderung einer Menge von zumindest einem Ausgangsstoff der mehreren Ausgangsstoffe, durch Veränderung einer Einwaage von zumindest einem Ausgangsstoff der mehreren Ausgangsstoffe, durch Veränderung eines Volumens von zumindest einem Ausgangsstoff der mehreren Ausgangsstoffe, und/oder durch Veränderung eines Zuflusses von zumindest einem Ausgangsstoff der mehreren Ausgangsstoffe aus einem Vorratsbehälter in einen Mischbehälter, beispielsweise über eine Dosierpumpe, angepasst werden.

Im erfindungsgemäßen Verfahren kann die mindestens eine Messgröße eine Farbaufspaltung und/oder einen optischen Versatz einer optischen Übertragung des Optikelements umfassen, die basierend auf der optischen Übertragung des Testmusters bestimmt werden. Die mindestens eine Messgröße kann die prismatische Wirkung des Optikelements umfassen, die basierend auf der optischen Übertragung des Testmusters bestimmt wird, und/oder kann eine optische Dispersion des Klebstoffs bei einer bestimmten Wellenlänge oder in einem Wellenlängenbereich umfassen. Bei dem Optikelement kann es sich um jegliche Art von Miko- und/oder Makrostruktur handeln, die aufgrund ihrer geometrischen Ausprägung im Falle eines nicht den Vorgaben entsprechenden Brechungsindex des Klebstoffes zu einer optisch auswertbaren Abweichung im Testbild führen. Typische Geometrien sind: Fresnelstrukturen, Prismenstrukturen, Pyramidenstrukturen, riefige oder wellige Strukturen, sphärische, torische oder freiformgeformte gekrümmte Flächen - zusammenhängend oder segmentiert, einzeln oder als Array angeordnet, etc. Das Optikelement kann bevorzugt eine Fresnel-Struktur umfassen, und das Testmuster kann bei dem Verfahren seitlich in die Fresnel-Struktur bzw. das Optikelement eingespiegelt werden. Die Fresnel-Struktur kann zum Beispiel Stufen entlang einer Fläche aufweisen und ein seitliches Einspiegeln kann dann in der Ebene dieser Fläche erfolgen.

Im erfindungsgemäßen Verfahren kann das Optikelement mehrere Optikkomponenten umfassen, und das Herstellen des mindestens einen Prüflings des Optikelements das Verkleben von mehreren Optikkomponenten mit dem Klebstoff und das Einleiten eines Aushärtens des Klebstoffs umfassen, wobei das Durchführen der optischen Analyse vor, während oder nach dem Einleiten des Aushärtens beginnt.

Das Herstellen des mindestens einen Prüflings eines Optikelements, das mehrere Optikkomponenten umfasst, kann das Verkleben von mehreren Optikkomponenten mit dem Klebstoff und das Einleiten eines Aushärtens des Klebstoffs umfassen, wobei eine erste Optikkomponente der mehreren Optikkomponenten des Optikelements eine Fresnel-Struktur umfasst, und
wobei eine zweite Optikkomponente der mehreren Optikkomponenten des Optikelements eine Schale umfasst. Alternativ sind auch anderweitige Strukturen, wie z.B. prismatische Strukturen denkbar.

### KURZE BESCHREIBUNG DER FIGUREN

FIG. 1 zeigt eine beispielhafte Anordnung zur Durchführung der optischen Analyse nach dem Verfahren gemäß der Erfindung.
FIG. 2 zeigt schematisch die Auswirkung der Brechungsindexvarianz für ein beispielhaftes Klebstoffsystem bei der optischen Analyse einer Optikkomponente.
FIG. 3 zeigt beispielhaft Auswirkungen einer unzureichenden Anpassung des Brechungsindex, die im Rahmen der optischen Analyse als Meßgröße zur Anpassung des Brechungsindex verwendet werden können.
FIG. 4 zeigt ein Schema für einen Aufbau eines regelkreisgesteuerten Prozesses als Ausgestaltung des erfindungsgemäßen Verfahrens.
FIG. 5 zeigt ein weiteres Schema für einen Aufbau eines regelkreisgesteuerten Prozesses als Ausgestaltung des erfindungsgemäßen Verfahrens.
FIG. 6 ist ein Flussdiagramm eines beispielhaften Verfahrens.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird.

Nachfolgend werden Techniken beschrieben, welche in der Herstellung von Optikelementen verwendet werden. Das erfindungsgemäße Verfahren zur Anpassung des Brechungsindex umfasst allgemein die Erhebung von mindestens einer Messgröße während einer optischen Analyse, welche die Erfassung der Güte des Indexmatches zur Bestimmung der Mengen und Mischungsverhältnisse des Klebstoffs ermöglicht, damit der Brechungsindex nach den Erfordernissen angepasst werden kann. Bei der "Index-gematchten" Überfüllung von Fresnel-Strukturen kann ein Testmuster wie beispielsweise ein Schwarz-Weiß-Testmuster (bevorzugt ein Muster aus Streifen, oder ein Schachbrettmuster, etc.) durch eine gefüllte Struktur, mittels einer Kamera betrachtet, und die Farbaufspaltung oder der optische Versatz aufgrund der bei nicht optimalem Match immer noch vorhandenen prismatischen Wirkung ausgewertet und als Messgröße herangezogen werden.

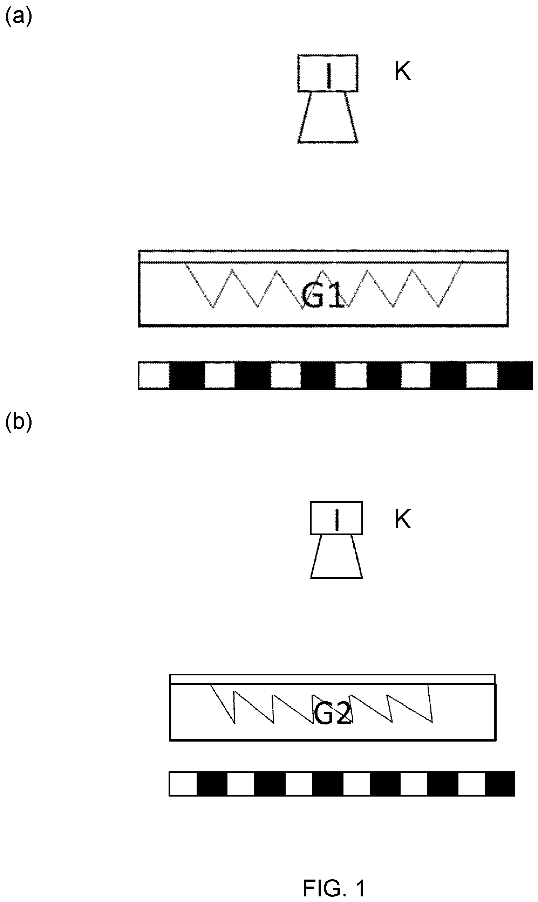

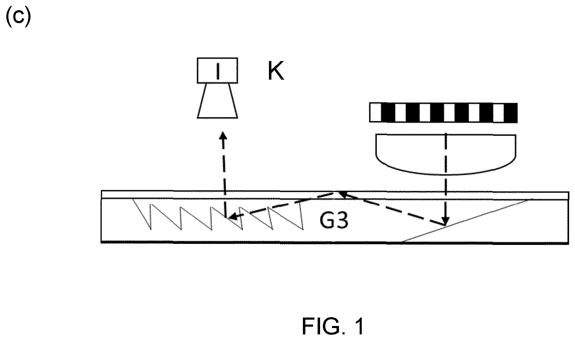

Durch solche Techniken können Optikelemente hergestellt werden, die zum Beispiel im Zusammenhang mit einer Datenbrille eingesetzt werden können. Solche Techniken könnten zum Beispiel auch für Head-Up-Bildschirme verwendet werden. Eine beispielhafte Anordnung, mit der das erfindungsgemäße Verfahren ausgeführt werden kann, ist in FIG. 1 gezeigt, wobei ein Testmuster durch einen Prüfling einer Optikkomponente oder eines Optikelements, beispielsweise ein Prüfling aus einer gefüllten Fresnel-Struktur G1 (FIG. 1a), G2 (FIG. 1b) oder G3 (FIG. 1c) mittels einer Kamera K betrachtet, und eine oder mehrere Messgrößen, wie beispielsweise die Farbaufspaltung und/oder der optische Versatz erfasst und ausgewertet werden. Dies ermöglicht dann über eine Veränderung der Menge der Komponenten des Klebstoffs eine bestimmte Brechwertanpassung, d.h. der Index-Match kann vorgenommen bzw. verbessert werden. Ein weiteres Ausführungsbeispiel bzgl. der Anordnung von Prüfling, Kamera und Testmuster ist beispielhaft in FIG. 1(c) gezeigt: Hierbei wird das vom Testmuster ausgehende Licht innerhalb des Waveguide bis zur Auskopplung Richtung Kamera geleitet. Im Sonderfall kann dieser Lichtweg innerhalb des Glases exakt dem des Anwendungsfalles als Smart Glass entsprechen.

Das Testmuster selbst kann auch ein selbstleuchtendes Objekt, wie z.B. ein Display, oder ein nicht selbstleuchtendes Objekt sein.

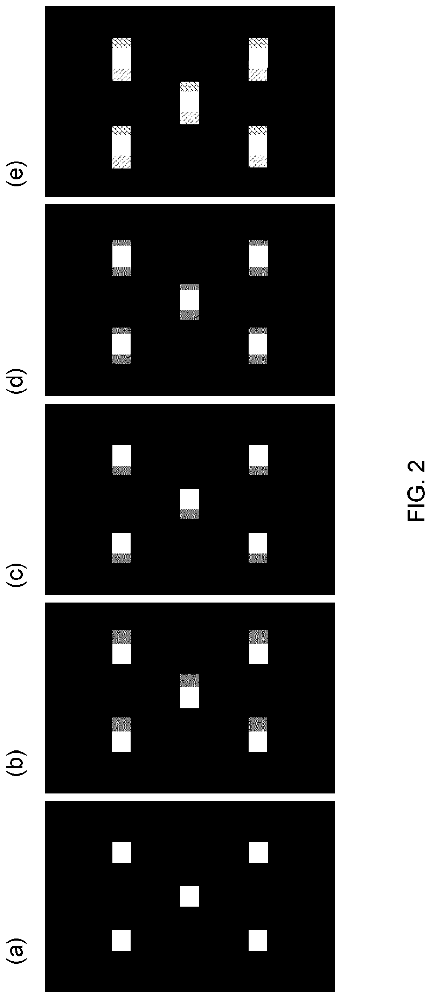

FIG. 2 zeigt beispielhaft die Auswirkung der Brechungsindexvarianz für ein beispielhaftes Klebstoffsystem auf einer Optikkomponente. Neben einem Versatz gegenüber dem Originalbild und oder einem versetzten Doppelbild ist eine unterschiedliche (Farb-)Aufspaltung ein weiteres Maß für den Match bzw. Mismatch der Brechungsindizes bzw. der Abbe-Zahlen von Grundmaterial und Klebstoff und damit auch ein Maß für den Anpassungsbedarf im Brechungsindex. Somit ist eine direkte Charakterisierung über den gesamten sichtbaren Wellenlängenbereich möglich.

In der FIG. 2 zeigt die Aufnahme a) ein mögliches Testmuster und die Darstellungen b) bis e) mögliche Aufnahmen, wie diese von einem Betrachter oder der Kamera beobachtet werden. In FIG. 2 zeigt (a) das Zielbild bzw. Target Image, (b) einen Bildversatz links, (c) einen Bildversatz rechts, (d) einen beidseitigen Bildversatz, und (e) illustriert eine Farbaufspaltung, z.B. rechts rot, links blau oder umgekehrt, etc. Diese Beobachtung kann prinzipiell vor, während oder nach dem Aushärteprozeß vorgenommen werden. Für die finale Beurteilung einer hinreichenden Anpassung der Brechungsindices ist der vollständig ausgehärtete Zustand maßgebend. Jedoch kann bei ausreichender Erfahrung mit dem jeweiligen Klebstoffsystem bereits auf Basis der Bildfehler des nichtausgehärteten, des nur teilweise ausgehärteten Systems oder während des Aushärteverlaufs bereits auf die finale Bauteilqualität im vollständig ausgehärteten Zustand geschlossen werden. Besonders bei sehr lang andauernden Aushärteprozessen ist eine frühzeitige Aussage über das zu erwartende Ergebnis besonders wertvoll, um rechtzeitig über die Anpassung der Mischungsverhältnisse Prozeßschwankungen ausgleichen zu können.

In Abhängigkeit vom Vorzeichen der Differenz von Ist- und Sollwert des Brechungsindex und den geometrischen Verhältnissen der aufzufüllenden Strukturen kann das von der Kamera aufgenommene Bild gegenüber dem Original einen Bildversatz, eine Verbreiterung der Testmarken oder eine Farbaufspaltung zeigen. Für den Fall, daß die in diesem Beispiel in FIG. 2 (b) - (e) gezeigten Aufnahmen den erreichten Endzustand der Härtung repräsentieren, zeigt die Erhebung einer Messgröße entsprechend dem Versatz oder der Farbaufspaltung an, dass der gewünschte Indexmatch nicht erreicht wurde, sodass unter weiterer Anwendung des erfindungsgemäßen Verfahrens, d.h. Anpassung des Mischungsverhältnisses und Herstellen mehrerer Serienprodukte des Optikelements unter Verwendung des Klebstoffs mit dem angepassten Mischungsverhältnis ein verbesserter Match gefunden werden kann.

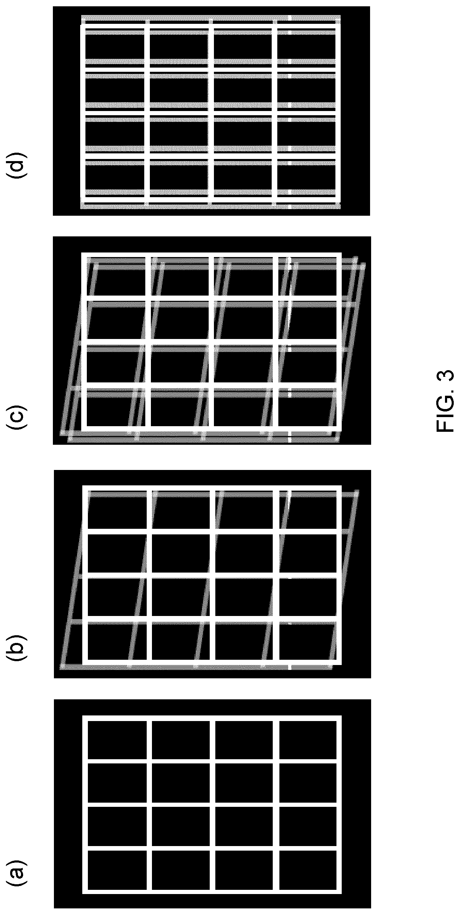

FIG. 3 zeigt in Analogie zu FIG. 2 beispielhaft ein weiteres Testmuster sowie optische Effekte, wie diese entsprechend den Geometrieverhältnissen bei unzureichendem Indexmatch auftreten und als Meßwertgrößen herangezogen werden können. Demgemäß zeigen FIG. 3 (a) das Target Image, und FIG. 3 (b) bis (d) einen entsprechenden Bildversatz.

Wie aus den vorstehenden Beobachtungen in Bezug auf FIG. 2 und FIG. 3 folgt, kann im erfindungsgemäßen Verfahren die mindestens eine Messgröße eine Farbaufspaltung und/oder einen optischen Versatz einer optischen Übertragung des Optikelements umfassen, die basierend auf der optischen Übertragung des Testmusters bestimmt werden.

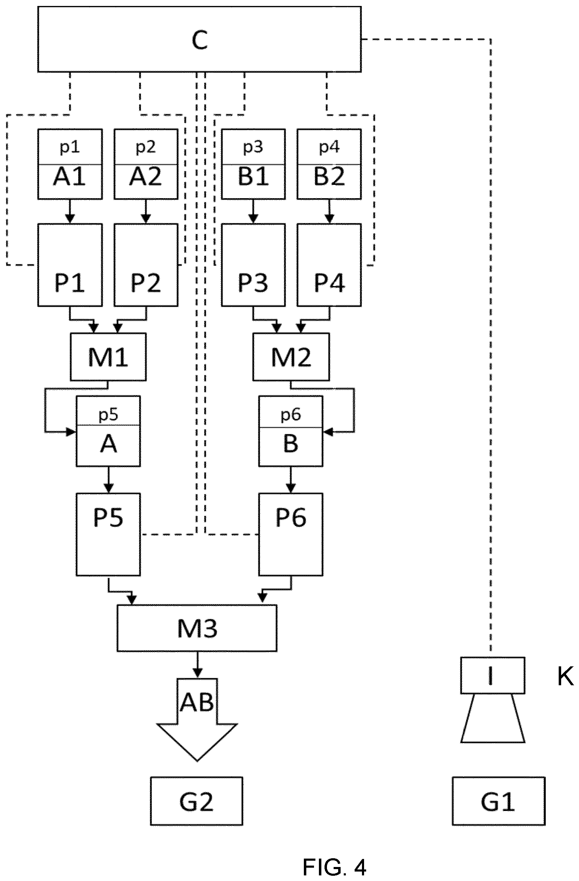

Das Verfahren kann auch als regelkreisgesteuerter Prozess ausgeführt werden. Als Beispiel soll der in der FIG. 4 schemenhaft dargestellte Aufbau erläutert werden, der aus der nachfolgend beschriebenen Anordnung besteht.

Wie zuvor beschrieben, wird der verwendete, transparente Klebstoff aus mehreren Ausgangsstoffen gebildet; wobei es sich um einen Zweikomponenten-Klebstoff (2K) handeln kann. Beispielsweise können die ersten und zweiten Ausgangsstoffe A1 und A2 die Harzkomponente A bilden, und die dritten und vierten Ausgangsstoffe B1 und B2 die Härterkomponente B bilden.

In dem in FIG. 4 beschriebenen Beispiel wird eine erste Komponente A des Zweikomponenten-Klebstoffs aus einem ersten Ausgangsstoff A1 und einem zweiten Ausgangsstoff A2 gemischt, und eine zweite Komponente B des Zweikomponenten-Klebstoffs aus einem dritten Ausgangsstoff B1 und einem vierten Ausgangsstoff B2 gemischt. Dabei wird ein Anpassen des Mischungsverhältnisses der mehreren Ausgangsstoffe, also eines ersten Teil-Mischungsverhältnisses (A1):(A2) des ersten Ausgangsstoffs A1 relativ zum zweiten Ausgangsstoff A2 beim Mischen der ersten Komponente A vorgenommen, und ein Anpassen des Mischungsverhältnisses der mehreren Ausgangsstoffe eines zweiten Teil-Mischungsverhältnisses (B1):(B2) des dritten Ausgangsstoffs B1 relativ zum vierten Ausgangsstoff B2 beim Mischen der zweiten Komponente B vorgenommen.

In der in FIG. 4 gezeigten Ausführung enthalten die Vorratsbehälter für die Ausgangsstoffe A1/A2 die Ausgangsstoffe für das Harz A, d.h. die ersten und zweiten Ausgangsstoffe A1 und A2, die das Harz A bilden, und nach Mischen im Mischer M1 in den Vorratsbehälter A gelangen. Die Vorratsbehälter B1/B2 enthalten die oben genannten Ausgangsstoffe für die Komponente B des Klebstoffs, d.h. die dritten und vierten Ausgangsstoffe B1 und B2, die nach Mischen im Mischer M2 in den Vorratsbehälter B gelangen. Die Komponenten A und B bilden zusammen das Reaktivsystem, das über die Zeit thermisch und/oder photochemisch/UV-aktiviert aushärtet, wobei die Komponenten in dem gezeigten Beispiel im Mischer M3 in Kontakt treten. Die Vorratsbehälter können mit den Drücken p1 bis p6 beaufschlagt werden, um die gewünschte Einspeisung in die Dosierpumpen P1 bis P6 sicherzustellen. Die Dosierpumpen sind für die exakte Einstellung der Mischungsverhältnisse in den ihnen nachfolgenden Mischsystemen bzw. Mischern M1 bis M3 zuständig und lassen sich über eine Controllereinheit C entsprechend steuern. Beispielsweise kann der Mischer M1 für die Mischung der Ausgangsstoffe A1 und A2 konfiguriert sein, der Mischer M2 für die Mischung der Ausgangsstoffe B1 und B2 konfiguriert sein, die jeweils über die Pumpen P5 und P6 in den Mischer M3 gelangen, der für die Mischung der Komponenten A (hier: Harz) und B (hier: Härter) konfiguriert ist. Somit wird der Klebstoff AB in reaktiver Form erhalten. Das erfindungsgemäße Verfahren kann auch die Anpassung eines dritten Teil-Mischungsverhältnisses der ersten Komponente A relativ zur zweiten Komponente B umfassen.

Die Steuerungsvorgaben für die Dosierpumpen können anhand der erwähnten optischen Analyse, also einer optischen Performanceanalyse, generiert und es kann auf diese Weise ein Regelkreis aufgebaut werden. Die Änderung der Mischungsverhältnisse bewirkt eine veränderte Reaktivität zwischen den Komponenten, beispielsweise zwischen Harz und Härter eines 2K-Klebstoffs. Dabei können die Mengen von zumindest einem Ausgangsstoff durch Veränderung der Einwaage, durch Veränderung eines Volumens, und/oder durch Veränderung eines Zuflusses von zumindest einem Ausgangsstoff der mehreren Ausgangsstoffe in einen Vorratsbehälter eingestellt werden.

Das Anpassen des Mischungsverhältnisses kann durch eine geregelte Steuerung eingestellt werden, wobei die geregelte Steuerung die Menge der Klebstoff-Komponenten oder Ausgangsstoffe, die mit einer weiteren Klebstoff-Komponente oder Ausgangsstoff vermischt werden, als Stellgröße verwendet.

Die Komponenten können ihrerseits wiederum aus mehreren Komponenten bzw., Bestandteilen oder Ausgangsstoffen aufgebaut sein. Die erwähnten ersten und zweiten Ausgangsstoffe A1 und A2 für die Komponente A können Varianten des gleichen chemischen Materials sein, in diesem Fall z.B. des Harzes, und unterscheiden sich beispielsweise im Brechungsindex im Bereich der dritten oder vierten Nachkommastelle. Der Unterschied kann wie oben erwähnt herstellungsbedingt, oder gezielt so eingestellt werden, daß eine der beiden Varianten unter und die andere über dem Zielwert des einzustellenden Brechungsindex für die Komponente A liegt. Über Dosierpumpen kann das entsprechende Mischungsverhältnis von A1 und A2 eingestellt, so daß A exakt auf einen aktuell benötigten Brechungsindex eingestellt werden kann. Wie eingangs erwähnt, kann es sich bei den Komponenten A1 bzw. A2 auch um unterschiedliche Klebstoffe handeln, beispielsweise zwei unterschiedliche 1K Klebstoffe.

Die Art und Weise, in welcher der Brechungsindex für die Komponente A gesteuert wird, lässt sich auch auf die Komponente B, die insbesondere der Härter eines 2K Klebstoffs sein kann, übertragen. Unterscheiden sich die Ausgangsstoffe B1 und B2 z.B. in Viskosität und/oder Reaktivität, so ist auch hier eine bedarfsgerechte und präzise Anpassung der Härterkomponente B möglich.

In Kombination mit der zweiten Komponente B des Reaktivsystems, hier dem Härter, der im vorstehenden Beispiel aus den dritten und vierten Ausgangsstoffen B1 und B2 gemischt wird, ergibt sich dann der final an die Optikkomponente bzw. das Bauteil angepasste Brechungsindex durch Mischen der Komponenten A und B.

Gerade für thermisch härtende Systeme treten häufig zwei gegenläufige Effekte auf. Mit höherer Temperatur nimmt die Viskosität ab, was oft gewünscht ist, um einen dünnen, gleichmäßigen Klebespalt auszubilden, und andererseits wird der Aushärtungsprozess beschleunigt, was, je nach sich einstellendem Temperaturgradient im Bauteil bzw. Klebespalt zu Spannungen und Verzug führen kann, was wiederum die optische Performance des Bauteils bzw. optischen Elements negativ beeinflussen kann. Somit ist auch hier eine verarbeitungsnahe Anpassungsmöglichkeit von Viskosität und/oder Reaktivität wünschenswert. Solche Änderungen wirken sich auch auf den Brechungsindex des Gesamtsystems A+B aus, was dann über die zuvor beschriebene Nachführung des Mischungsverhältnisses der Ausgangsstoffe (vorstehend als A1 und A2 bezeichnet) ausgeglichen wird. Beispielsweise kann die Harzkomponente (vorstehend als A bezeichnet) Einfluß auf die optischen Eigenschaften, und die Härterkomponente B Einfluß auf die Verarbeitungseigenschaften haben. Die Komponenten können mit deren verschiedenen Eigenschaften wie beispielsweise ein chargenweise (also aufgrund der Produktion abweichender) unterschiedlicher Brechungsindex in dem Ausgangsstoff (vorstehend mit A1 bzw. A2 bezeichnet) nach Bedarf gemischt werden.

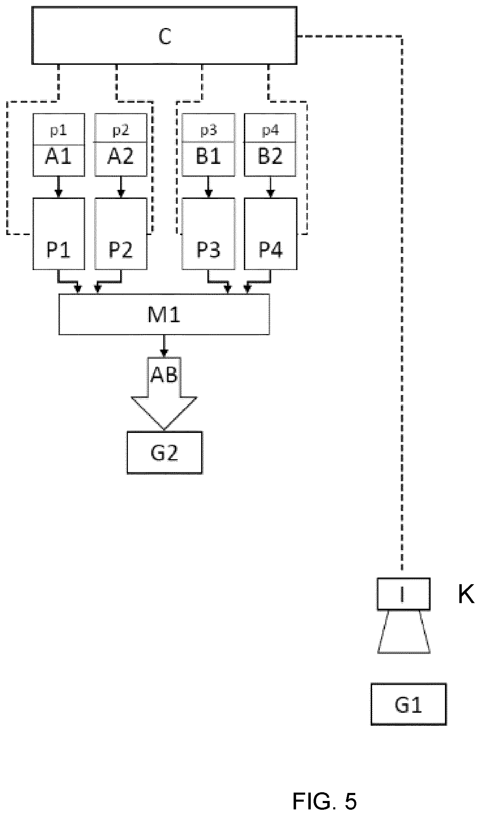

Hier kann das Verfahren die Erfassung der Güte des Indexmatches zur Bestimmung der über den (beispielsweise in den exemplarischen Anordnungen in FIG. 4 und 5 gezeigten) Controller C einzustellenden einzelnen Volumenströme und Mischungsverhältnisse mit einschließen. Eine solche Ausführung kann weiterhin das Implementieren eines Regelkreises umfassen, wobei der Regelkreis die mindestens eine Messgröße mit einem jeweiligen Sollwert vergleicht und als Regelgröße eine Dosierung von mindestens einem der mehreren Ausgangsstoffe beim Anpassen des Mischungsverhältnisses einstellt.

Wie vorstehend beschrieben, kann bei der "Index-gematchten" Überfüllung von Fresnel-Strukturen z.B. ein Schwarz-Weiß-Testmuster (Streifen, Schachbrettmuster, etc.) durch die gefüllte Optikkomponente (Fresnel-Struktur) als Prüfling (in den Figuren als G1,G2 und G3 bezeichnet) mittels einer Kamera betrachtet werden. Die Farbaufspaltung oder der optische Versatz aufgrund der bei nicht optimalem Match immer noch vorhandenen prismatischen Wirkung werden ausgewertet und als Messgröße für den Indexmatch herangezogen. Eine beispielhafte Anordnung für eine optische Analyse ist in FIG. 1, 4 und 5 gezeigt.

Es können auch im Vergleich zu den vorstehend beschriebenen Analysemethoden unterschiedliche Analysemethoden zum Aufbau der Regelung verwendet werden.

Das Verfahren der Erfindung kann in vorteilhafter Weise als Prozess ausgeführt werden, wobei ein Regelkreis aufgebaut wird. So kann das Verfahren das Implementieren eines Regelkreises umfassen, wobei der Regelkreis die mindestens eine Messgröße mit einem jeweiligen Sollwert vergleicht und als Regelgröße eine Dosierung von mindestens einem der mehreren Ausgangsstoffe beim Anpassen des Mischungsverhältnisses einstellt. Dies ist sowohl auf die Mischung der Komponenten wie z.B. Harz und Härter, als auch auf die Ausgangsstoffe der Harz- bzw. Härterkomponente anwendbar.

Weitere Unterkonfigurationen ausgehend von dem oben beschriebenen Aufbau sind ebenfalls denkbar, wie am folgenden Beispiel erläutert:
Der bisher beschriebene Aufbau für ein 2-Komponentensystem schließt die Anwendung auf ein 1-Komponentensystem, wie z.B. UV-härtende 1-Komponenten-Klebstoffe, oder Gemische derselben, mit ein. Auch hier ist es äußerst schwierig, jedoch notwendig, einen perfekten Indexmatch sicherzustellen und auch den prozessbedingten Indexschwankungen (beispielsweise des für den Grundmaterial verwendeten Kunststoffes) nachzuführen. Gemäß einer in FIG. 5 gezeigten Variante der Erfindung entfällt im Vergleich zu FIG. 4 die Mischung der Ausgangsstoffe A1 und A2 zu A und B1 mit B2 zu B und es werden alle Komponenten A1, A2, B1 und B2 direkt in nur eine gemeinsame Mischereinheit M1 dosiert. Der Brechungsindex des Gesamtsystems wird über die Variation des Volumenstroms der Ausgangsstoffe A1,A2, B1 und oder B1 einzeln oder gemeinsam den Erfordernissen entsprechend in den Volumenverhältnissen geregelt. Entsprechend können auch die ersten und zweiten Ausgangsstoffe A1 und A2 über die Pumpen P1 und P2 direkt in den Mischer M1 zugeführt werden, ebenso wie die Ausgangsstoffe B1 und B2 über die Pumpen P3 und P4, wobei die gefüllte Optikkomponente G2, die eine Fresnel-Struktur sein kann, die nach Mischen von A und B erhalten wird.

FIG. 5 zeigt eine vereinfachte Anordnung als ein Beispiel zur Ausführung des Verfahrens der Erfindung. G1 illustriert einen Prüfling, der eine gefüllte Struktur einer Optikkomponente umfassen kann, z.B. eine gefüllte Fresnel-Struktur als Optikkomponente bzw. Bestandteil eines Optikelements. Der Prüfling G1 wird mit der Kamera K einer optischen Analyse unter Erhebung mindestens einer Messgröße unterzogen, wobei ggf. wie vorstehend erwähnt, zusätzlich ein Muster für die optische Analyse herangezogen werden kann. In der in FIG. 5 gezeigten Variante werden die Komponenten (beispielsweise Harz und Härter, vorstehend als A und B bezeichnet) direkt dem Mischer M1 zugeführt, und nicht über separate Ströme in den Mischern M1 und M2 als getrennte Komponenten A und B vorgehalten (vgl. FIG. 4). In Analogie zu der in FIG. 4 gezeigten Anordnung werden - gesteuert durch den Controller C und bestimmt durch das Analyseergebnis aus dem Prüfling G1 - die ersten und zweiten Ausgangsstoffe A1 und A2 (welche zum Beispiel gemischt das Harz A ergeben) - ggf. mit Drücken p1 und p2 beaufschlagt - durch die Pumpen P1 und P2 dem Mischer M1 zugeführt. Die dritten und vierten Ausgangsstoffe B1 und B2 (welche zum Beispiel gemischt den Härter B ergeben), werden - ggf. beaufschlagt mit den Drücken p3 und p4 - durch die Pumpen P3 und P4 dem Mischer M1 zugeführt, worin dann die Mischung zum Klebstoff AB erfolgt, der zu der gefüllten Struktur G2 verarbeitet wird. Gegebenenfalls kann die Struktur G2 dann - im Vergleich zu der Struktur G1 - parallel oder aufeinanderfolgend der optischen Analyse unterzogen werden, um ein Indexmatching durchzuführen. Bei den Strukturen G1 und G2 kann es sich um jegliche Art von Miko- und / oder Makrostruktur handeln, die aufgrund ihrer geometrischen Ausprägung im Falle eines nicht den Vorgaben entsprechenden Brechungsindex des Klebstoffes zu einer optisch auswertbaren Abweichung im Testbild führen. Typische Geometrien sind: Fresnelstrukturen, Prismenstrukturen, Pyramidenstrukturen, riefige oder wellige Strukturen, sphärische, torische oder freiformgeformte gekrümmte Flächen - zusammenhängend oder segmentiert, einzeln oder als Array angeordnet, etc.

Wie vorstehend erwähnt, kann die Einstellung des Brechungsindex über Variationen bei der Einwaage oder dem Zufluss bzw. Volumen der Komponenten des Klebstoffs erfolgen.

Auf diese Weise kann die Einstellung des Brechungsindex während des Herstellungsprozesses erfolgen und die exakte Anpassung und Nachführung entsprechend des erfindungsgemäßen Verfahrens. Bevorzugt erfolgt die Beeinflussung über einen Controller (Steuereinheit) C, wie in FIG. 4 und 5 dargestellt.

Als Klebstoff im erfindungsgemäßen Verfahren kann beispielsweise eine Zusammensetzung auf der Basis von Epoxidharzen und Thiolen verwendet werden, die aminkatalysiert polymerisiert werden kann.

Bei Klebstoffen, insbesondere Konstruktionsklebstoffen, die in der Feinmechanik und Optik eingesetzt werden, besteht zunehmend Bedarf an kurzen Aushärtezeiten. Reaktions-Klebstoff mit kurzen Aushärtezeiten haben üblicherweise auch kurze Verarbeitungszeiten. Aus technologischer Sicht sind jedoch häufig ausreichend lange Verarbeitungszeiten erforderlich, beispielsweise um die zu verklebenden Werkstücke genau auszurichten. Als handelsübliche Klebstoffe, die bei Raumtemperatur aushärten, sind Polyurethanklebstoffe und amingehärtete Epoxidharze bekannt. Bei einer Verarbeitungszeit von ca. einer Stunde liegt dabei die Aushärtezeit bei Raumtemperatur bis zum Erreichen der Endfestigkeit im Bereich von etwa ein bis zwei Tagen.

Das erfindungsgemäße Verfahren zur Anpassung des Brechungsindex eignet sich insbesondere für ein Optikelement, bei dem Optikkomponenten und deren Teile durch den genannten Klebstoff miteinander verklebt sind und der Klebstoff Teil des optischen Systems wird.

Im erfindungsgemäßen Verfahren kann ein Klebstoff bzw. eine Zusammensetzung mit kurzer Aushärtezeit bei gleichzeitig ausreichend langer Verarbeitungszeit verwendet werden, so dass eine vollständige Durchhärtung bereits bei Raumtemperatur erfolgt und der Mikrokitt hervorragende Haftfestigkeiten aufweist.

Ein im erfindungsgemäßen Verfahren einsetzbarer Klebstoff kann beispielsweise der DE 10 2012 210 185 A1, der WO 2009/056196 A1 oder der WO 2015/121341 A1 entnommen werden. Auf diese Weise können die einzelnen Teile einer Optikkomponente, oder Optikkomponenten, mittels eines Klebemittels oder Klebstoffsystems, basierend auf einer aminkatalysierten Thiolhärtung von Epoxidharzen analog WO 2015/121341 A1, insbesondere denjenigen analog Anspruch 1 bis 9, und insbesondere bevorzugt analog Anspruch 1 der WO 2015/121341 A1, miteinander verbunden werden. Die Verarbeitung kann beispielsweise bei einer Temperatur aus einem Bereich von 20°C bis 80°C, bevorzugt aus einem Bereich von 40°C bis 70°C und besonders bevorzugt aus einem Bereich von 45°C bis 65°C durchgeführt werden.

Als Ausgangsstoff für einen im erfindungsgemäßen Verfahren verwendbaren Klebstoff analog der WO 2015/121341 A1 kann ein tertiäres Amin verwendet werden.

Eine im Verfahren der Erfindung verwendbare Klebstoff-Zusammensetzung kann UV-härtbar sein und eine photolatente Base enthalten, wie beispielsweise in Anspruch 9 der WO 2015/121341 A1 beschrieben. Unter der photolatenten Base im Sinne der Erfindung wird die photolatente Basenverbindung gemäß Patentanspruch 1 der EP 2 145 231 B1 verstanden, auf den vorliegend Bezug genommen wird. Ein Photoinitiator im Sinne der Erfindung ist eine chemische Verbindung, die durch Absorption von Licht in reaktionsfähige Bruchstücke zerfällt. Diese reaktionsfähigen Bruchstücke lösen dann in der Zusammensetzung die Schutzgruppe von der photolatenten Base ab, so dass eine stark basische Amidinstruktur aus der photolatenten Base entsteht, die als Base die Polymerisationsreaktion zwischen dem Epoxid und der SH-Gruppe des Thiolesters katalysiert. Auf diese Weise wird die aminkatalysierte Thiolreaktion mit dem Epoxid im Bereich der Einwirkung von UV-Licht lokal beschleunigt, wodurch die Aushärtezeit der Zusammensetzung stark verkürzt wird.

Zusätzlich kann zum Photoinitiator ein Farbstoff enthalten sein.

Bei Verwendung der Zusammensetzung gemäß der WO 2015/121341 A1 als Einbettmedium oder zum Kleben von Gläsern ist es von Vorteil, wenn die Zusammensetzung zusätzlich ein Alkoxysilan enthält, das ggf. zusätzlich eine polymerisierbare Gruppe aufweist.

Weiter kann die Zusammensetzung gemäß der WO 2015/121341 A1 zusätzlich Weichmacher, Festweichmacher, Kunstharze; und/oder Polymere wie zum Beispiel Ethylenvinylacetat-Copolymere (EVA) enthalten. Des weiteren können Füllstoffe wie Quarzmehle (Silbond) und hochdisperse Kieselsäure als Zusatzstoffe eingesetzt werden.

Bevorzugt sollten die Harzkomponente des Feinkitts, wie auch der Härter auf die genannte Genauigkeit reproduzierbar hergestellt werden. Um diese Genauigkeit zu realisieren, werden für das erfindungsgemäße Verfahren für die Harzkomponente (beispielsweise eine Epoxidverbindung, Komponente (A)) und/oder für die Härterkomponente (beispielsweise ein Thiolester (B) bzw. oligomeres Thiourethan) vorzugsweise mindestens zwei Hauptbestandteile, z.B. Thiolester oder Thiourethane, mit unterschiedlichen Brechwerten verwendet.

Die in der WO 2015/121341 A1 beschriebenen Zusammensetzungen für Feinkitte mit hoher Brechwertanpassung haben sich als besonders geeignet erwiesen. Von Vorteil ist es dabei, die oben bzw. in dieser Druckschrift beschriebenen Oligomere einzusetzen, insbesondere die oligomeren Thiourethane (reduzierte Volumenschrumpf, geringe Spannungen bei der Härtung, angepasste Viskosität an die Harzkomponente - dadurch bessere Mischbarkeit von Harz und Härter).

Das erfindungsgemäße Verfahren kann beispielsweise in einem Verfahren zum Herstellen eines Optikelementes, das für einen vorbestimmten Wellenlängenbereich transparent ist und in dem eine optisch wirksame Struktur eingebettet ist, das die folgenden Schritte aufweist, wie folgt implementiert werden:
a) Bereitstellen einer ersten für den vorbestimmten Wellenlängenbereich transparenten Schale, die einstückig ausgebildet ist und die an ihrer Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen einer zweiten für den vorbestimmten Wellenlängenbereich transparenten Schale, die einstückig ausgebildet ist und die eine Unterseite mit komplementäre Form zur Form der Oberseite der ersten Schale mit oder ohne komplementärer Struktur der ersten Schale aufweist,
d) Aufbringen einer für den vorbestimmten Wellenlängenbereich transparenten Zusammensetzung als Klebstoff auf der Oberseite der ersten Schale und/oder der Unterseite der zweiten Schale, und
e) Verbinden der Oberseite der ersten Schale mit der Unterseite der zweiten Schale mittels des Klebstoffs,
wobei der Brechungsindex des Optikelements durch das erfindungsgemäße Verfahren angepasst wird,
so dass ein zweischaliges Optikelement hergestellt wird, in dem die optisch wirksame Struktur eingebettet ist.

Wie vorstehend beschrieben, kann die optisch wirksame Struktur eine Fresnel-Struktur sein. Wie eingangs erwähnt, kann es sich bei den optisch wirksamen Strukturen um jegliche Art von Miko- und / oder Makrostruktur handeln, die aufgrund ihrer geometrischen Ausprägung im Falle eines nicht den Vorgaben entsprechenden Brechungsindex des Klebstoffes zu einer optisch auswertbaren Abweichung im Testbild führen. Typische Geometrien sind: Fresnelstrukturen, Prismenstrukturen, Pyramidenstrukturen, riefige oder wellige Strukturen, sphärische, torische oder freiformgeformte gekrümmte Flächen - zusammenhängend oder segmentiert, einzeln oder als Array angeordnet, etc.

Mit einem solchen Verfahren kann ein Optikelement mit zwei oder mehr Schalen (insbesondere mit genau zwei Schalen) mit der gewünschten Genauigkeit in großer Stückzahl und geeigneten optischen Eigenschaften hergestellt werden. Das Optikelement kann dabei auch mehr als zwei Schalen sowie zwei oder mehrere Teile aufweisen, die mit dem Klebstoff miteinander verklebt oder verbunden werden.

Die erste Schale kann im Schritt a) so bereitgestellt werden, dass die Oberseite mit Ausnahme des strukturierten Abschnittes als glatte Fläche ausgebildet wird.

Des Weiteren kann nach dem Schritt b) zumindest eine durch den strukturieren Abschnitt gebildete Vertiefung mit Material bis zur Oberseite aufgefüllt werden. Dabei wird bevorzugt das gleiche Material verwendet, aus dem die erste Schale gebildet ist. Ferner kann die beschriebene Zusammensetzung zum Auffüllen verwendet werden.

Die Auffüllung kann in einem Schritt oder in mehreren Auffüllschritten durchgeführt werden. Insbesondere wird die Auffüllung so durchgeführt, dass eine glatte durchgehende Oberseite vorliegt. Der aufgefüllt strukturierte Abschnitt bildet somit zusammen mit der restlichen Oberseite eine durchgehende Fläche.

Bei dem genannten, auf der WO 2015/121341 A1 basierenden Verfahren kann im Schritt d) der Klebstoff, bei dem der Brechungsindex mit dem erfindungsgemäßen Verfahren angepasst worden ist, als Klebstoffschicht auf der gesamten Oberseite der ersten Schale und/oder der gesamten Unterseite der zweiten Schale aufgebracht werden. Insbesondere kann auch der strukturierte Abschnitt (bevorzugt wenn er bis zur Oberseite mit Material aufgefüllt ist) mit der Klebstoffschicht versehen werden.

Die erste Schale kann aus einem ersten Polymermaterial und die zweite Schale kann jeweils ausgewählt sein aus einem oder mehreren aus einem thermoplastischen Material, einem duroplastischen Material, mineralischen Materialien und einer Kombination aus Polymermaterial und mineralischen Gläsern .

Die optisch wirksame Struktur kann, wie in der WO 2015/121341 A1 beschrieben, beispielsweise als reflektive und/oder diffraktive Struktur ausgebildet sein. Insbesondere kann die optisch wirksame Struktur als teilreflektive Struktur und/oder wellenlängenabhängige reflektive Struktur ausgebildet sein. Die Bildung der ersten und/oder zweiten Schale kann insbesondere jeweils in zumindest zwei aufeinanderfolgenden Teilschritten durchgeführt werden. Dies führt zu einem verringerten Schwund bei der Herstellung der ersten bzw. zweiten Schale. Bei der beschriebenen Struktur werden beispielsweise als erstes und zweites Polymermaterial solche Materialien verwendet, deren Brechungsindices sich für zumindest eine Wellenlänge aus dem vorbestimmten Wellenlängenbereich um nicht mehr als 0,005, bevorzugt nicht mehr als 0,002, stärker bevorzugt nicht mehr als 0,0005, noch stärker bevorzugt nicht mehr als 0,0001, unterscheiden. Insbesondere können sich die Brechungsindices um nicht mehr als 0,00005 unterscheiden. Bei einem solch geringen Brechungsindexunterschied verschwindet quasi optisch die Grenzfläche zwischen den beiden Polymermaterialien für den vorbestimmten Wellenlängenbereich.

Dabei können die Polymermaterialien so gewählt sein, dass sie im vorbestimmten Wellenlängenbereich die gleiche Dispersion aufweisen. Bei dem vorbestimmten Wellenlängenbereich kann es sich um den sichtbaren Wellenlängenbereich, den nahen Infrarotbereich, den Infrarotbereich und/oder den UV-Bereich handeln.

Unter Verwendung des Verfahrens gemäß der vorliegenden Erfindung kann beispielsweise ein optisches Element gemäß der in der WO 2015/121341 A1 beschriebenen Vorgehensweise so hergestellt werden, dass beispielsweise in einem ersten Schritt ein erstes Halbzeug im Spritzguss aus einem thermoplastischen Polymer hergestellt wird. Dabei weist das erste Halbzeug eine erste Seite und eine zweite Seite auf. An der zweiten Seite ist eine Mikrostrukturierung ausgebildet, die die Form der gewünschten reflektiven Facetten vorgibt.

Als Material für die beiden Halbzeuge können unterschiedliche Materialien verwendet werden. Bevorzugt wird jedoch für beide Halbzeuge das gleiche Material verwendet. Insbesondere sind die vorgenannten thermoplastischen Materialien und/oder duroplastische Materialien geeignet.

Mit den in der WO 2015/121341 A1 beschriebenen Klebstoffen lassen sich ausreichend lange Verarbeitungszeiten von etwa 60 - 120 Min. bei einer vollständigen Durchhärtung innerhalb von etwa 4 - 6 Stunden (bei Raumtemperatur) erreichen, wobei hervorragende Haftfestigkeiten erzielt werden können.

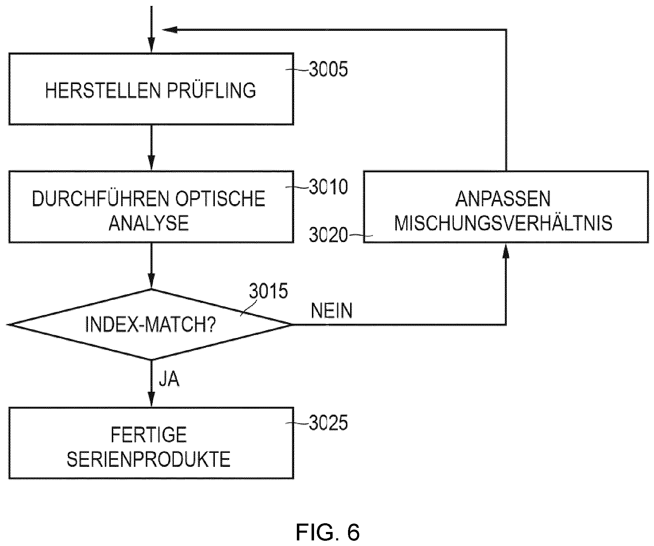

FIG. 6 ist ein Flussdiagramm eines beispielhaften Verfahrens zum Anpassen des Brechungsindex eines Klebstoffs für ein Optikelement.

In Box 3005 wird ein Prüfling des Optikelements hergestellt. Dazu können mehrere Optikkomponenten des Optikelements miteinander verklebt werden. Dazu wird ein optisch transparenter Klebstoff verwendet, wie voranstehend beschrieben. Dieser optisch transparente Klebstoff weist mehrere Ausgangsstoffe auf, die miteinander vermischt werden. Bei der ersten Iteration von Box 3005 wird ein initiales Mischungsverhältnis der mehreren Ausgangsstoffe verwendet.

Beispielsweise kann in Box 3005 eine Technik wie im Zusammenhang mit FIG. 4 durchgeführt werden, um die Mischung durchzuführen, wobei, wie vorstehend erwähnt, die ersten und zweiten Ausgangsstoffe A1 und A2, die das Harz A bilden, nach Mischen im Mischer M1 in den Vorratsbehälter A gelangen, und die dritten und vierten Ausgangsstoffe B1 und B2 nach Mischen im Mischer M2 in den Vorratsbehälter B gelangen. Die Komponenten A und B bilden zusammen das Reaktivsystem, das über die Zeit thermisch und/oder photochemisch/UV-aktiviert aushärtet, wobei die Komponenten in dem gezeigten Beispiel im Mischer M3 in Kontakt treten.

Darüber hinaus kann in Box 3005 eine Technik wie im Zusammenhang mit FIG. 5 durchgeführt werden, wobei im Vergleich zu FIG. 4, wie vorstehend erwähnt, die Komponenten (beispielsweise Harz und Härter, vorstehend als A und B bezeichnet) direkt dem Mischer M1 zugeführt werden, und nicht über separate Ströme in den Mischern M1 und M2 als getrennte Komponenten A und B vorgehalten werden. In Analogie zu der in FIG. 4 gezeigten Anordnung werden - gesteuert durch den Controller C und bestimmt durch das Analyseergebnis aus dem Prüfling G1 - die ersten und zweiten Ausgangsstoffe A1 und A2 (welche zum Beispiel gemischt das Harz A ergeben) - ggf. mit Drücken p1 und p2 beaufschlagt - durch die Pumpen P1 und P2 dem Mischer M1 zugeführt. Die dritten und vierten Ausgangsstoffe B1 und B2 (welche zum Beispiel gemischt den Härter B ergeben), werden - ggf. beaufschlagt mit den Drücken p3 und p4 - durch die Pumpen P3 und P4 dem Mischer M1 zugeführt, worin dann die Mischung zum Klebstoff AB erfolgt, der zu der gefüllten Struktur G2 verarbeitet wird.

Das Mischungsverhältnis der Ausgangsstoffe bestimmt den Brechungsindex. Insbesondere kann der Brechungsindex beim initialen Mischungsverhältnis abweichen vom Brechungsindex des Substratmaterials, dass für ein oder mehrere der Optikelemente verwendet wird. Dies kann der Fall sein aufgrund von Chargenschwankungen des Substratmaterials und/oder aufgrund von Schwankungen des Mischungsverhältnisses der Ausgangsstoffe. Die Umgebungsbedingungen können auch einen Einfluss auf die Güte der Anpassung des Brechungsindex haben.

In Box 3010 wird eine optische Analyse des Prüflings, der in der aktuellen Iteration von Box 3005 hergestellt wurde, durchgeführt. Die optische Analyse dient dem Zweck, die Güte der Anpassung des Brechungsindex zwischen Klebstoff und Optikkomponenten zu bestimmen. Beispielsweise kann in Box 3010, wie vorstehend erwähnt, eine optische Analyse unter Erhebung der mindestens einen Messgröße durchgeführt werden, wie beispielsweise in FIG. 1, 4 und 5 dargestellt. Insbesondere kann in Box 3010 wie in FIG. 4 und 5 dargestellt, eine optische Analyse des Prüflings G1, der z.B. eine gefüllte Fresnel-Struktur als Optikkomponente umfassen kann, mit der Kamera K unter Erhebung mindestens einer Messgröße durchgeführt werden, wobei ggf. wie vorstehend erwähnt, die Übertragung eines Musters durch eine Kamera für die optische Analyse herangezogen werden kann. Die in Box 3010 beschriebene Technik der Überprüfung kann auch das Ergebnis der optischen Analyse, wie beispielsweise die in FIG. 2 und FIG. 3 dargestellte Farbaufspaltung oder den optischen Versatz, auswerten.

In Box 3015 wird dann überprüft, ob ein Index-Match vorliegt oder nicht, das heißt ob der Brechungsindex des Klebstoffs vom Brechungsindex der Optikkomponenten, die das Optikelement bilden, abweicht. Beispielsweise kann überprüft werden, ob eine Abweichung innerhalb eines vorgegebenen Toleranzbereichs vorliegt, sodass das Mischungsverhältnis der mehreren Ausgangsstoffe zwischen dem Herstellen der mehreren Prüflinge - vorzugsweise progressiv, linear oder degressiv - angepasst werden kann, basierend auf dem Ergebnis der Auswertung der vorangegangenen optischen Analysen der mehreren Prüflinge, beispielsweise des optischen Versatzes oder der Farbaufspaltung, wie in FIG. 2 und FIG. 3 dargestellt.

Wenn die Überprüfung in Box 3015 ergibt, dass der Brechungsindex des Klebstoffs signifikant vom Brechungsindex der Optikkomponenten abweicht, so kann in Box 3020 das Mischungsverhältnis der Ausgangsstoffe angepasst werden. Dies könnte zum Beispiel geregelt erfolgen. Beispielsweise könnte bei einer solchen geregelten Anpassung ein Vorzeichen der Abweichung und/oder eine Stärke der Abweichung berücksichtigt werden und mittels eines vorgegebenen Modells übersetzt werden, in einer Anpassung des Mischungsverhältnisses von ein oder mehreren Ausgangsstoffen in Bezug auf ein oder mehrere andere Ausgangsstoffe. Beispielsweise könnte eine Tendenz darin bestehen, dass bei einer größeren Abweichung der Brechungsindizes eine größere Anpassung des Mischungsverhältnisses erfolgt. Die konkrete Implementierung der Anpassung des Mischungsverhältnisses hängt von der Art des verwendeten Klebstoffs bzw. von den verwendeten Ausgangsstoffen ab. Beispielsweise könnte eine solche Abhängigkeit in empirischen Versuchen ermittelt werden. Eine solche Logik könnte durch einen Controller abgebildet werden, der basierend auf Programmcode aus einem Speicher, den der Controller ausführt, z.B. eine Dosierpumpe ansteuert. Dadurch kann insbesondere ein Regelkreis implementiert werden, der den Brechungsindex-Mismatch minimiert und als Steuergröße das Mischungsverhältnis der Ausgangsstoffe verwendet. Ein solcher Regelkreis kann mit einer besonders großen Latenz arbeiten, weil zum Beispiel die optische Analyse einen stabilen Zustand abwarten muß, nach Einleiten des Aushärtens des Klebstoffs.

Ist jedoch das Aushärteverhalten bekannt, so kann bereits auf Basis der im unausgehärteten Zustand festgestellten Abweichung nachgeregelt werden. In diesem Fall wäre die Zielgröße ein bestimmter Versatz oder eine bestimmte Farbaufspaltung gleich nach dem Applizieren des Klebstoffsystems oder in einem definierten teilausgehärteten Zustand.

Mit dem angepassten Mischungsverhältnis wird dann in einer weiteren Iteration der Boxen 3005, 3010, 3015 überprüft, ob ein Index-Match vorliegt. Das bedeutet also, dass das Herstellen mehrerer Prüflinge (beispielsweise progressiv, linear oder degressiv) erfolgen kann, wobei die Anpassung des Mischungsverhältnisses der mehreren Ausgangsstoffe zwischen dem Herstellen zweier Prüflinge (in aufeinanderfolgenden Iterationen der Boxen 3005, 3010, 3015) jeweils auf dem Ergebnis einer entsprechenden optischen Analyse der vorangehenden Iteration erfolgt.

Wenn die Überprüfung in Box 3015 schließlich ergibt, dass der Brechungsindex des Klebstoffs nicht oder nicht signifikant abweicht vom Brechungsindex der Optikkomponenten, also ein erfolgreicher Indexmatch vorliegt, so können in Box 3025 fertige Serienprodukte mit den gewünschten optischen Eigenschaften hergestellt werden.

Unter Verwendung des vorstehend beschriebenen erfindungsgemäßen Verfahrens kann ein Optikelement für eine Anzeigevorrichtung oder Datenbrille hergestellt werden, das mehrere Optikkomponenten umfasst, und für einen vorbestimmten Wellenlängenbereich transparent oder teiltransparent ist, und in dem eine optisch wirksame Struktur eingebettet ist, wobei das erfindungsgemäße Verfahren eine Anpassung des Brechungsindex ermöglicht, sodass eine störungsfreie Sicht durch das Optikelement möglich ist.

## Patentansprüche

1. Verfahren zur Anpassung des Brechungsindex eines Klebstoffs für ein Optikelement, wobei der Klebstoff optisch transparent ist und aus mehreren Ausgangsstoffen hergestellt wird, wobei das Verfahren umfasst:
- Herstellen mindestens eines Prüflings des Optikelements unter Verwendung des Klebstoffs,
- Durchführen einer optischen Analyse des mindestens einen Prüflings des Optikelements unter Erhebung mindestens einer Messgröße,
- Anpassen eines Mischungsverhältnisses der mehreren Ausgangsstoffe des Klebstoffs basierend auf einem Ergebnis der optischen Analyse, und
- Herstellen mehrerer Serienprodukte des Optikelements unter Verwendung des Klebstoffs mit dem angepassten Mischungsverhältnis der mehreren Ausgangsstoffe.

2. Verfahren nach Anspruch 1,
wobei nacheinander mehrere Prüflinge des Optikelements hergestellt werden, wobei das Mischungsverhältnis der mehreren Ausgangsstoffe zwischen dem Herstellen der mehreren Prüflinge angepasst wird, basierend auf dem Ergebnis der vorangegangenen optischen Analysen der mehreren Prüflinge.

3. Verfahren nach Anspruch 2, wobei das Verfahren weiterhin umfasst: Implementieren eines Regelkreises, wobei der Regelkreis die mindestens eine Messgröße mit einem jeweiligen Sollwert vergleicht und als Regelgröße eine Dosierung von mindestens einem der mehreren Ausgangsstoffe beim Anpassen des Mischungsverhältnisses einstellt.

4. Verfahren nach Anspruch 3,
wobei eine Regelungstoleranz des Regelungskreises als Abweichung von einem vorgegebenen Brechungsindex kleiner als 0,0005 oder kleiner als 0,0001 ist.

5. Verfahren nach einem der voranstehenden Ansprüche,
wobei die mehreren Ausgangsstoffe einen ersten Ausgangsstoff, einen zweiten Ausgangsstoff, einen dritten Ausgangsstoff und einen vierten Ausgangsstoff umfassen,
wobei der Klebstoff ein Zweikomponenten-Klebstoff ist,
wobei eine erste Komponente des Zweikomponenten-Klebstoffs aus dem ersten Ausgangsstoff und dem zweiten Ausgangsstoff gemischt wird,
wobei eine zweite Komponente des Zweikomponenten-Klebstoffs aus dem dritten Ausgangsstoff und dem vierten Ausgangsstoff gemischt wird,
wobei das Anpassen des Mischungsverhältnisses der mehreren Ausgangsstoffe das Anpassen eines ersten Teil-Mischungsverhältnisses des ersten Ausgangsstoffs relativ zum zweiten Ausgangsstoffs beim Mischen der ersten Komponente umfasst,
wobei das Anpassen des Mischungsverhältnisses der mehreren Ausgangsstoffe das Anpassen eines zweiten Teil-Mischungsverhältnisses des dritten Ausgangsstoffs relativ zum vierten Ausgangsstoff beim Mischen der zweiten Komponente umfasst,
wobei gegebenenfalls das Anpassen des Mischungsverhältnisses das Anpassen eines dritten Teil-Mischungsverhältnisses der ersten Komponente relativ zur zweiten Komponente umfasst.

6. Verfahren nach einem der vorangehenden Ansprüche,
wobei die mehreren Ausgangsstoffe einen ersten Ausgangsstoff, einen zweiten Ausgangsstoff, einen dritten Ausgangsstoff und einen vierten Ausgangsstoff umfassen,
wobei der Klebstoff ein Zweikomponenten-Klebstoff ist,
wobei das Mischen der ersten Komponente des Zweikomponenten-Klebstoffs aus dem ersten Ausgangsstoff und dem zweiten Ausgangsstoff in einem ersten Mischer erfolgt, und
wobei das Mischen der zweiten Komponente des Zweikomponenten-Klebstoffs aus dem dritten Ausgangsstoff und dem vierten Ausgangsstoff in einem zweiten Mischer erfolgt,
und wobei das Mischen der ersten und zweiten Komponente des Zweikomponenten-Klebstoff in einem dem ersten und zweiten Mischer nachgeschalteten dritten Mischer erfolgt.

7. Verfahren nach einem der voranstehenden Ansprüche,
wobei das Mischungsverhältnis der mehreren Ausgangsstoffe durch Veränderung einer Menge von zumindest einem Ausgangsstoff der mehreren Ausgangsstoffe, durch Veränderung einer Einwaage von zumindest einem Ausgangsstoff der mehreren Ausgangsstoffe, durch Veränderung eines Volumens von zumindest einem Ausgangsstoff der mehreren Ausgangsstoffe, und/oder durch Veränderung eines Zuflusses von zumindest einem Ausgangsstoff der mehreren Ausgangsstoffe aus einem Vorratsbehälter in einen Mischbehälter beispielsweise über eine Dosierpumpe eingestellt wird

8. Verfahren nach einem der voranstehenden Ansprüche,
wobei das Durchführen der optischen Analyse das Erheben einer zeitlichen Entwicklung der mindestens einen Messgröße über eine Zeitdauer von mindestens 24 Stunden umfasst, und/oder
wobei das Durchführen der optischen Analyse das Erfassen einer optischen Übertragung eines Testmusters durch das Optikelement mittels einer Kamera umfasst,
wobei gegebenenfalls die mindestens eine Messgröße eine Farbaufspaltung und/oder einen optischen Versatz einer optischen Übertragung des Optikelements umfasst, die basierend auf der optischen Übertragung des Testmusters bestimmt werden, und/oder
wobei die mindestens eine Messgröße die prismatische Wirkung des Optikelements umfasst, die basierend auf der optischen Übertragung des Testmusters bestimmt wird.

9. Verfahren nach Anspruch 8,
wobei das Optikelement eine Fresnel-Struktur umfasst, und
wobei das Testmuster seitlich in die Fresnel-Struktur eingespiegelt wird.

10. Verfahren nach einem der voranstehenden Ansprüche,
wobei die mindestens eine Messgröße eine optische Dispersion des Klebstoffs bei einer bestimmten Wellenlänge oder in einem Wellenlängenbereich umfasst.

11. Verfahren nach einem der voranstehenden Ansprüche,
wobei das Optikelement mehrere Optikkomponenten umfasst,
wobei das Herstellen des mindestens einen Prüflings des Optikelements das Verkleben der mehreren Optikkomponenten mit dem Klebstoff und das Einleiten eines Aushärtens des Klebstoffs umfasst,
wobei das Durchführen der optischen Analyse nach dem Einleiten des Aushärtens beginnt.

12. Verfahren nach einem der voranstehenden Ansprüche,
wobei das Optikelement mehrere Optikkomponenten umfasst,
wobei das Herstellen des mindestens einen Prüflings des Optikelements das Verkleben von mehreren Optikkomponenten mit dem Klebstoff und das Einleiten eines Aushärtens des Klebstoffs umfasst,
wobei eine erste Optikkomponente der mehreren Optikkomponenten des Optikelements eine Fresnel-Struktur umfasst, und
wobei eine zweite Optikkomponente der mehreren Optikkomponenten des Optikelements eine Schale umfasst, wobei
gegebenenfalls die erste Optikkomponente eine Schale ist, welche die Fresnel-Struktur umfasst

13. Verfahren nach einem der Ansprüche 11 oder 12, wobei eine oder mehrere der Optikkomponenten im Spritzgussverfahren hergestellt ist.

14. Verfahren nach einem der vorangehenden Ansprüche,
wobei eine Härtungsreaktion des Klebstoffs mittels UV-Licht und/oder thermisch eingeleitet wird.

15. Verfahren nach einem der vorangehenden Ansprüche, wobei der Klebstoff ein thermisch oder photochemisch wie zum Beispiel UV-aushärtender Klebstoff ist, und/oder
wobei der Klebstoff aus mehreren 1-Komponenten-Klebstoffen als Ausgangsstoffen hergestellt wird, und/oder
wobei der Klebstoff ein durch aminkatalysiertes Thiol härtendes Epoxidharz, oder ein Polycarbonatharz umfasst.

## Claims

1. Method of adjusting the refractive index of an adhesive for an optical element, wherein the adhesive is optically transparent and is produced from multiple starting materials, wherein the method comprises:
- producing at least one specimen of the optical element using the adhesive,
- conducting an optical analysis of the at least one specimen of the optical element with recording of at least one measurement parameter,
- adjusting a mixing ratio of the multiple starting materials of the adhesive based on a result of the optical analysis, and
- producing multiple repeat products of the optical element using the adhesive with the adjusted mixing ratio of the multiple starting materials.

2. Method according to Claim 1,
wherein multiple specimens of the optical element are produced successively, wherein the mixing ratio of the multiple starting materials is adjusted between the producing of the multiple specimens, based on the result of the preceding optical analyses of the multiple specimens.

3. Method according to Claim 2, wherein the method further comprises:
implementing a closed-loop control circuit, wherein the closed-loop control circuit compares the at least one measurement parameter with a respective target value and sets a dosage of at least one of the multiple starting materials as controlled variable in the adjusting of the mixing ratio.

4. Method according to Claim 3,
wherein a closed-loop control tolerance of the closed-loop control circuit as variance from a defined refractive index is less than 0.0005 or less than 0.0001.

5. Method according to any of the preceding claims,
wherein the multiple starting materials comprise a first starting material, a second starting material, a third starting material and a fourth starting material, wherein the adhesive is a two-component adhesive,
wherein a first component of the two-component adhesive is mixed from the first starting material and the second starting material,
wherein a second component of the two-component adhesive is mixed from the third starting material and the fourth starting material,
wherein the adjusting of the mixing ratio of the multiple starting materials comprises the adjusting of a first partial mixing ratio of the first starting material relative to the second starting material in the mixing of the first component,
wherein the adjusting of the mixing ratio of the multiple starting materials comprises the adjusting of a second partial mixing ratio of the third starting material relative to the fourth starting material in the mixing of the second component,
wherein optionally the adjusting of the mixing ratio comprises the adjusting of a third partial mixing ratio of the first component relative to the second component.

6. Method according to any of the preceding claims,
wherein the multiple starting materials comprise a first starting material, a second starting material, a third starting material and a fourth starting material,
wherein the adhesive is a two-component adhesive,
wherein the first component of the two-component adhesive is mixed from the first starting material and the second starting material in a first mixer, and
wherein the second component of the two-component adhesive is mixed from the third starting material and the fourth starting material in a second mixer, and wherein the first and second components of the two-component adhesive are mixed in a third mixer downstream of the first and second mixers.

7. Method according to any of the preceding claims,
wherein the mixing ratio of the multiple starting materials is adjusted by varying an amount of at least one starting material of the multiple starting materials, by varying a weight of at least one starting material of the multiple starting materials, by varying a volume of at least one starting material of the multiple starting materials, and/or by varying a flow rate of at least one starting material of the multiple starting materials from a reservoir vessel into a mixing vessel, for example via a metering pump.

8. Method according to any of the preceding claims,
wherein the performing of the optical analysis comprises the recording of a temporal evolution of the at least one measurement parameter over a period of at least 24 hours, and/or
wherein the performing of the optical analysis comprises the detecting of an optical transmission of a test pattern through the optical element by means of a camera,
wherein optionally the at least one measurement parameter comprises a colour splitting and/or an optical displacement of an optical transmission of the optical element, which are determined based on the optical transmission of the test pattern, and/or
wherein the at least one measurement parameter comprises the prismatic effect of the optical element which is determined based on the optical transmission of the test pattern.

9. Method according to Claim 8,
wherein the optical element comprises a Fresnel structure, and
wherein the test pattern is reflected laterally into the Fresnel structure.

10. Method according to any of the preceding claims,
wherein the at least one measurement parameter comprises an optical dispersion of the adhesive at a particular wavelength or within a wavelength range.

11. Method according to any of the preceding claims,
wherein the optical element comprises multiple optical components,
wherein the producing of the at least one specimen of the optical element comprises the bonding of the multiple optical components with the adhesive and the initiating of curing of the adhesive,
wherein the performing of the optical analysis commences after the initiation of curing.

12. Method according to any of the preceding claims,
wherein the optical element comprises multiple optical components,
wherein the producing of the at least one specimen of the optical element comprises the bonding of multiple optical components with the adhesive and the initiating of curing of the adhesive,
wherein a first optical component of the multiple optical components of the optical element comprises a Fresnel structure, and
wherein a second optical component of the multiple optical components of the optical element comprises a shell, wherein
optionally the first optical component is a shell comprising the Fresnel structure.

13. Method according to either of Claims 11 and 12, wherein one or more of the optical components have been produced by the injection moulding method.

14. Method according to any of the preceding claims,
wherein a curing reaction of the adhesive is initiated by means of UV light and/or thermally.

15. Method according to any of the preceding claims, wherein the adhesive is a thermally curing or photochemically curing such as, for example, UV-curing adhesive, and/or
wherein the adhesive is produced from multiple 1-component adhesives as starting materials, and/or
wherein the adhesive comprises an epoxy resin that cures via amine-catalysed thiol, or a polycarbonate resin.

## Revendications

1. Procédé pour l'adaptation de l'indice de réfraction d'un adhésif pour un élément optique, l'adhésif étant optiquement transparent et fabriqué à partir de plusieurs substances de départ, le procédé comprenant :
- la fabrication d'au moins une ébauche de l'élément optique à l'aide de l'adhésif,
- la réalisation d'une analyse optique de ladite au moins une ébauche de l'élément optique avec collecte d'au moins une grandeur de mesure,
- l'adaptation d'un rapport de mélange desdites plusieurs substances de départ de l'adhésif sur la base d'un résultat de l'analyse optique et
- la fabrication de plusieurs produits de série de l'élément optique à l'aide de l'adhésif présentant le rapport de mélange adapté desdites plusieurs substances de départ.

2. Procédé selon la revendication 1,
plusieurs ébauches de l'élément optique étant fabriquées successivement, le rapport de mélange desdites plusieurs substances de départ étant adapté entre la fabrication desdites plusieurs ébauches, sur la base du résultat des analyses optiques précédentes desdites plusieurs ébauches.

3. Procédé selon la revendication 2, le procédé comprenant en plus :
la mise en œuvre d'un circuit de régulation, le circuit de régulation comparant ladite au moins une grandeur de mesure à une valeur de consigne respective et réglant, comme grandeur de régulation, un dosage d'au moins l'une desdites plusieurs substances de départ lors de l'adaptation du rapport de mélange.

4. Procédé selon la revendication 3,
une tolérance de régulation du circuit de régulation en tant que déviation par rapport à un indice de réfraction spécifié étant inférieure à 0,0005 ou inférieure à 0,0001.

5. Procédé selon l'une des revendications précédentes,
lesdites plusieurs substances de départ comprenant une première substance de départ, une deuxième substance de départ, une troisième substance de départ et une quatrième substance de départ,
l'adhésif étant un adhésif à deux composants,
un premier composant de l'adhésif à deux composants constitué par la première substance de départ et la deuxième substance de départ étant mélangé, un deuxième composant de l'adhésif à deux composants constitué par la troisième substance de départ et la quatrième substance de départ étant mélangé,
l'adaptation du rapport de mélange desdites plusieurs substances de départ comprenant l'adaptation d'un premier rapport de mélange partiel de la première substance de départ par rapport à la deuxième substance de départ lors du mélange du premier composant,
l'adaptation du rapport de mélange desdites plusieurs substances de départ comprenant l'adaptation d'un deuxième rapport de mélange partiel de la troisième substance de départ par rapport à la quatrième substance de départ lors du mélange du deuxième composant,
le cas échéant, l'adaptation du rapport de mélange comprenant l'adaptation d'un troisième rapport de mélange partiel du premier composant par rapport au deuxième composant.

6. Procédé selon l'une des revendications précédentes,
lesdites plusieurs substances de départ comprenant une première substance de départ, une deuxième substance de départ, une troisième substance de départ et une quatrième substance de départ,
l'adhésif étant un adhésif à deux composants,
le mélange du premier composant de l'adhésif à deux composants constitué par la première substance de départ et la deuxième substance départ ayant lieu dans un premier mélangeur et
le mélange du deuxième composant de l'adhésif à deux composants constitué par la troisième substance de départ et la quatrième substance départ ayant lieu dans un deuxième mélangeur,
et le mélange du premier et du deuxième composant de l'adhésif à deux composants ayant lieu dans un troisième mélangeur disposé en aval du premier et du deuxième mélangeur.

7. Procédé selon l'une des revendications précédentes,
le rapport de mélange desdites plusieurs substances de départ étant réglé par modification d'une quantité d'au moins une substance de départ parmi lesdites plusieurs substances de départ, par modification d'une pesée d'au moins une substance de départ parmi lesdites plusieurs substances de départ, par modification d'un volume d'au moins une substance de départ parmi lesdites plusieurs substances de départ et/ou par modification d'un flux d'au moins une substance de départ parmi lesdites plusieurs substances de départ à partir d'un réservoir dans un récipient de mélange, par exemple par l'intermédiaire d'une pompe de dosage.

8. Procédé selon l'une des revendications précédentes,
la réalisation de l'analyse optique comprenant la collecte d'un développement temporel de ladite au moins une grandeur de mesure sur une durée d'au moins 24 heures et/ou
la réalisation de l'analyse optique comprenant la détection d'un transfert optique d'un motif de test à travers l'élément optique au moyen d'une caméra,
le cas échéant, ladite au moins une grandeur de mesure comprenant une dissociation de couleur et/ou un décalage optique d'un transfert optique de l'élément optique, qui est/sont déterminé(e)(s) sur la base du transfert optique du motif de test et/ou
ladite au moins une grandeur de mesure comprenant l'effet prismatique de l'élément optique qui est déterminé sur la base du transfert optique du motif de test.

9. Procédé selon la revendication 8,
l'élément optique comprenant une structure de Fresnel et
le motif de test étant réfléchi latéralement dans la structure de Fresnel.

10. Procédé selon l'une des revendications précédentes,
ladite au moins une grandeur de mesure comprenant une dispersion optique de l'adhésif à une longueur d'onde déterminée ou dans une plage de longueurs d'onde.

11. Procédé selon l'une des revendications précédentes,
l'élément optique comprenant plusieurs composants optiques,
la fabrication de ladite au moins une ébauche de l'élément optique comprenant le collage desdits plusieurs composants optiques à l'aide de l'adhésif et l'initiation d'un durcissement de l'adhésif,
la réalisation de l'analyse optique démarrant après l'initiation du durcissement.

12. Procédé selon l'une des revendications précédentes,
l'élément optique comprenant plusieurs composants optiques,
la fabrication de ladite au moins une ébauche de l'élément optique comprenant le collage de plusieurs composants optiques à l'aide de l'adhésif et l'initiation d'un durcissement de l'adhésif,
un premier composant optique parmi lesdits plusieurs composants optiques de l'élément optique comprenant une structure de Fresnel et
un deuxième composant optique parmi lesdits plusieurs composants optiques de l'élément optique comprenant une coque et
le cas échéant, le premier composant optique étant une coque qui comprend une structure de Fresnel.

13. Procédé selon l'une des revendications 11 ou 12, l'un ou plusieurs des éléments optiques étant fabriqué(s) dans un procédé de moulage par injection.

14. Procédé selon l'une des revendications précédentes,
une réaction de durcissement de l'adhésif étant initiée au moyen de lumière UV et/ou thermiquement.

15. Procédé selon l'une des revendications précédentes, l'adhésif étant un adhésif durcissant thermiquement ou photochimiquement, comme par exemple un adhésif durcissant par UV et/ou
l'adhésif étant préparé à partir de plusieurs adhésifs à 1 composant en tant que substances de départ et/ou
l'adhésif comprenant une résine époxy durcissant par un thiol catalysé par amine ou une résine polycarbonate.
